# EUROPEAN PATENT APPLICATION

(11) **EP 1 775 487 A2**
(43) Date of publication of application: **18.04.2007**
(21) Application number: 06255203.9
(22) Date of filing: 09.10.2006
(51) Int. Cl.: F16C 33/20

(54) **Plain bearing**

(30) Priority: 12.10.2005 JP 2005297773
(71) Applicant: Daido Metal Company Ltd., Naka-ku Nagoya (JP)
(72) Inventor: Tanaka, Takuya Daido Metal Company Ltd., Aichi (JP); Kawakami, Naohisa Daido Metal Company Ltd., Aichi (JP); Nakasone, Takeyuki Daido Metal Company Ltd., Aichi (JP); Naka, Isei Daido Metal Company Ltd., Aichi (JP)
(74) Representative: Smith, Norman Ian

(57) **Abstract**

Disclosed is a plain bearing having a back metal layer and a bearing alloy layer of an Al alloy. The bearing alloy layer is formed on the back metal layer. The Al alloy contains not more than 2 mass% Sn. There is provided a resin-coating layer on the bearing alloy layer. The resin-coating layer consists of a solid lubricant and a resin binder.

## Description

### BACKGROUND OF THE INVENTION

The present invention relates to a plain bearing comprising a back metal layer and a bearing alloy layer made of an Al alloy formed on the back metal layer, more particularly, to the plain bearing having a resin-coating layer provided on the bearing alloy layer.

There have been used a plain bearing comprising a bearing alloy layer made of an Al alloy. Such a plain bearing with utilization of an Al alloy have been used widely for high speed and high load applications such as an engine bearing since the Al alloy is excellent in fatigue resistance and wear resistance properties because of high strength. However, the Al alloy is unsatisfactory in conformability and anti-seizure property because of high hardness, so that there has been tried to improve the Al alloy in conformability and anti-seizure property by adding a soft alloying element of Sn into the Al alloy and providing the bearing alloy layer with a plating layer made of Pb or a Pb alloy. However, plain bearings provided with a plating layer of Pb or a Pb alloy have problems in fatigue resistance and wear resistance properties because of the low strength of Pb.

On the other hand, there has been proposed a resin-coating layer containing a solid lubricant instead of the plating layer made of Pb or a Pb alloy (for example, refer to EP-1,522,750-A1).

### BRIEF SUMMARY OF THE INVENTION

However, the plain bearing disclosed in EP-1,522,750-A1 have problems that the resin-coating layer is liable to exfoliate because of insufficient cavitation resistance property due to low adhesion strength of the resin-coating layer to the bearing alloy layer.Accordingly an object of the present invention is to provide a plain bearing in which a resin-coating layer formed on a bearing alloy layer made of an Al alloy, and according to which the adhesion strength of the resin-coating layer can be improved whereby being capable of improving the cavitation resistance property.

The present inventors made hardly a research in order to find reasons why the resin-coating layer has not enough adhesion strength when the resin-coating layer is formed on the bearing alloy layer made of an Al alloy, and concluded as follows:

As can be seen from EP-1,522,750-A1, for example, the Al alloy as the bearing alloy layer contains a much amount of 20 to 45 wt% Sn.

On the other hand, the resin-coating layer is formed by a process of mixing a solid lubricant powder in a resin binder, applying the thus obtained liquid mixture to a surface of the bearing alloy layer, and curing it at a high temperature. In the curing step of the resin-coating layer, when the temperature of an Al alloy containing a much amount of Sn is elevated by heating, Sn in the Al alloy is melted to exude between the bearing alloy layer and the resin-coating layer. This deteriorates the adhesion strength of the resin-coating layer to facilitate the resin-coating layer to exfoliate thereby deteriorating the cavitation resistance property.

Even if making the curing temperature of the resin-coating layer is lowered to avoid tin-exudation, there will occur the same phenomenon of tin-exudation under thermal effect of friction heat caused by the rotation of a mating shaft and heat from an engine when the bearing is used actually as an engine bearing, whereby the resin-coating is deteriorated in the adhesion strength.

During studying concerning the resin-coating layer, the present inventors found also that when the tin amount is not more than 2 mass%, even if the resin-coating layer is subjected to an increased temperature for curing in order to well cure the resin-coating layer, tin does not exude on a surface of the bearing alloy layer.

The present invention has been achieved on the basis of such experimental results.

According to the invention, there is provided a plain bearing comprising a back metal layer and a bearing alloy layer made of an Al alloy formed on the back metal layer, wherein the Al alloy contains from zero to 2 mass% of Sn and the bearing alloy layer is provided with a resin-coating layer consisting of a solid lubricant and a resin binder.

According to such an arrangement, since the Al alloy contains no tin or only 2 mass% or less of tin, even when the bearing alloy layer is heated during curing of the resin-coating layer or actual operation of the plain bearing, tin does not exude between the bearing alloy layer and the resin-coating layer whereby being capable of keeping good adhesion property of , so that the resin-coating layer is hardly exfoliated because of good cavitation resistance property.

When the Sn content exceeds 2 mass%, tin is likely to exude to the surface of the bearing alloy layer during curing of the resin-coating layer or actual operation of the plain bearing as an engine bearing. In order to improve the adhesion property of the resin-coating layer on the bearing alloy layer, preferably the Al alloy is tin-free.

In the present invention, the resin binder of the resin-coating layer may be comprised of one or more selected from the group of PI (polyimide resin), PAI (polyamideimide resin), PBI (polybenzoimidazole resin), EP (epoxy resin) and FP (phenol resin).

The solid lubricant may be comprised of one or more selected from the group of MoS₂ (molybdenum disulfide), graphite, PTEE (polytetrafluoroethylene) and BN (boron nitride).

Preferably, the resin-coating layer contains 30 to 80 vol.% of the resin binder and 20 to 70 vol.% of the solid lubricant. If the content of the solid lubricant is less than 20 vol.%, it is impossible to attain an improvement effect of conformability and anti-seizure property. If the content of the solid lubricant exceeds 70 vol.%, the resin-coating layer is deteriorated in the adhesion property to the bearing alloy layer and the strength thereof. Preferably, the content of the solid lubricant is 35 to 55 vol.%.

Preferably, the resin-coating layer has a thickness of 3 to 30 µm in order to attain good conformability, anti-seizure property and fatigue resistance property. If the thickness is less than 3 µm, it is impossible to attain an improvement effect of conformability and anti-seizure property. If the thickness exceeds 30 µm, it is impossible to attain an improvement effect of strength, fatigue resistance property and anti-seizure property of the resin-coating layer. Preferably, the thickness is 5 to 25 µm, more preferably 10 to 20 µm.

In the present invention, the Al alloy as the bearing alloy layer may consist of from zero to not more than 2 mass% of Sn; 0.1 to 20 mass% in total of one or more elements selected from the group consisting of Si, Cu, Ni, Cr, Zn, Mn, Ti, B, Zr, Mg, V, Pb and Bi, and the balance of Al and incidental impurities.

In the above alloying elements, Si improves fatigue resistance and wear resistance properties of the bearing alloy layer. Since Si particles having high hardness are dispersed in an Al matrix of the Al alloy, when a surface wear of the Al matrix is advanced, the Si particles are exposed to protrude from the surface of the bearing alloy layer so as to bear a load from a mating shaft thereby improving fatigue resistance property. In addition, the protruded Si particles have a lapping function of making the mating shaft smooth. Furthermore, there are formed recesses by virtue of the protruding Si particles, in which recesses a lubricant oil is retained thereby decreasing wear of the bearing alloy layer. Preferably, the Si content is 1 to 9 mass%.

The additive elements of Cu, Ni, Cr, Zn, Mn, Ti, B, Zr, Mg and V dissolve into the Al matrix or form intermetallic compounds to precipitate whereby increasing hardness and strength of the bearing alloy layer. Especially, since Cu and Mg improve the heat treatment property of the Al alloy, they are effective when the Al alloy is subjected to heat treatment in order to improve the alloy strength. The content of the respective additive element is preferably 0.1 to 3 mass%.

Zn dissolves into the Al matrix to increase the affinity of the Al alloy with lubricating oil. The Zn content is preferably 2 to 8 mass%.

Pb and Bi improve the Al alloy in machinability and anti-seizure property. The content of the respective additive is preferably 0.1 to 3 mass%.

In view of fatigue resistance property, preferably the bearing alloy layer has a Vickers hardness of 60 to 130.

### BRIEF DESCRIPTION OF THE DRAWING

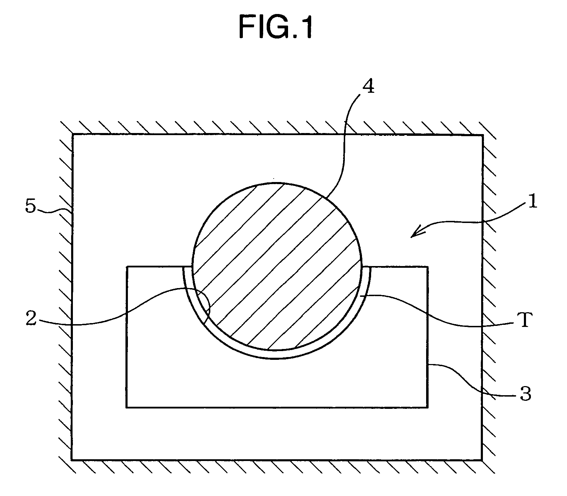

FIG. 1 is a front view of a pressure device used for the cavitation tests.

### DETAILED DESCRIPTION OF THE INVENTION

Al alloys having the chemical components shown at the column of the bearing alloy layer in below Table 1 were cast and subsequently rolled to produce Al alloy plates. The respective Al alloy plate (to be a bearing alloy layer) was bonded to a steel plate (to be a back metal) by rolling to produce a bimetal. The bimetal was formed by press-forming to have a hemicylindrical shape and subsequently machined to have a predetermined measurement of an inner diameter of 53mm and a thickness (i.e. a total thickness of a back metal and a bearing alloy layers) of 1.5mm. Thereafter, a resin-coating layer was applied to a surface of the bearing alloy layer, a chemical composition of which resin-coating layer can be seen at the column of the components of coating layer in Table 1. Thus, Invention Specimen Nos. 1 to 12 and Comparative Specimen Nos. 1 to 6 were obtained. It should be noted that only Comparative Specimen No. 7 was provided with a plating layer of a Pb alloy consisting of 10 mass% of Sn and the balance of Pb without providing a resin-coating layer as the coating layer. Table 1 includes also the column of Curing Temperature of the resin-coating layers and the column of Thickness of the coating layers, wherein the curing time is of one hour.

**Table 1**

| Specimen | | Bearing Alloy Layer | | | | | | | Components of Coating Layer (vol.%) | | | | | Coating Layer Thickness (µm) | Curing Temp. (°C) | Cavitation Test Volume loss (mm³) | |
|---|---|---|---|---|---|---|---|---|---|---|---|---|---|---|---|---|---|
| | | Components (mass%) | | | | | | | Resin binder | | Solid lubricant | | | | | | |
| | | Al | Sn | Cu | Si | Zn | Pb | Mn | PAl | PBI | MoS₂ | Gr | PTFE | | | Without heat treatment | With heat treatment |
| Invention Specimen | 1 | Bal. | - | 1 | 6 | 4 | 1 | - | - | Bal. | 30 | 15 | 5 | 15 | 250 | 0.7 | 0.7 |
| | 2 | Bal. | 1 | - | 3 | - | 1 | 0.1 | Bal. | - | 35 | 15 | - | 5 | 230 | 0.8 | 0.9 |
| | 3 | Bal. | 1.5 | 2 | 5 | - | - | - | Bal. | - | 25 | 15 | - | 10 | 230 | 0.7 | 1.0 |
| | 4 | Bal. | - | 2 | 3 | - | 1.5 | - | - | Bal. | 60 | - | - | 35 | 250 | 1.3 | 1.5 |
| | 5 | Bal. | 1 | - | 3 | - | 1 | 0.1 | - | Bal. | 60 | - | - | 25 | 250 | 0.9 | 1.2 |
| | 6 | Bal. | - | 1 | 6 | 4 | 1 | - | Bal. | - | 35 | 15 | - | 20 | 230 | 0.7 | 0.7 |
| | 7 | Bal. | - | 2 | 3 | - | 1.5 | - | - | Bal. | 60 | 15 | - | 20 | 250 | 1.4 | 1.3 |
| | 8 | Bal. | 1.5 | 2 | 5 | - | - | - | - | Bal. | 30 | 15 | 5 | 10 | 250 | 0.8 | 1.1 |
| | 9 | Bal. | - | 2 | 3 | - | 1.5 | - | - | Bal. | 60 | - | - | 5 | 250 | 0.9 | 1.0 |
| | 10 | Bal. | 1 | - | 3 | - | 1 | 0.1 | Bal. | - | 20 | 20 | 10 | 20 | 230 | 0.7 | 0.8 |
| | 11 | Bal. | - | 1 | 6 | 4 | 1 | 0.1 | Bal. | - | 25 | 15 | - | 15 | 230 | 0.6 | 0.6 |
| | 12 | Bal. | - | 2 | 3 | - | 1.5 | - | - | Bal. | 50 | 10 | - | 20 | 250 | 0.9 | 0.8 |
| Comparative Specimen | 1 | Bal. | 3 | 1 | 3 | - | - | 0.2 | - | Bal. | 30 | 15 | 5 | 10 | 220 | 1.0 | 1.8 |
| | 2 | Bal. | 25 | 1 | - | - | - | 0.3 | Bal. | - | 35 | 15 | - | 20 | 190 | 1.2 | 1.3 |
| | 3 | Bal. | 20 | 1 | - | - | - | - | - | Bal. | 30 | 15 | 5 | 10 | 250 | 3.7 | 5.4 |
| | 4 | Bal. | 6 | 1 | - | - | - | - | Bal, | - | 25 | 15 | - | 20 | 220 | 0.7 | 2.1 |
| | 5 | Bal. | 10 | 1 | 4 | - | - | - | Bal. | - | 35 | 15 | - | 5 | 200 | 1.0 | 2.5 |
| | 6 | Bal. | 20 | 1 | - | - | - | - | - | Bal. | 30 | 15 | 5 | 15 | 200 | 1.3 | 4.2 |
| | 7 | Bal. | - | 1 | 6 | 4 | 1 | - | Pb-10Sn | | | | | 20 | - | 4.9 | 5.5 |

A cavitation test (i.e. a first cavitation test) was conducted for Invention Specimen Nos. 1 to 12 and Comparative Specimen Nos. 1 to 7.

Another set of Invention Specimen Nos. 1 to 12 and Comparative Specimen Nos. 1 to 7 were prepared and subjected to a heat treatment by which tin contained in the bearing alloy layers is promoted to exude therefrom in order to simulate actual operations of engine bearings. Thereafter, all the specimens were subjected to a cavitation test (i.e. a second cavitation test). Conditions of the first and second cavitation tests are shown in Table 2.

**Table 2**

| | Condition | Unit |
|---|---|---|
| Bearing Size | ∅56 × t1.5 | mm |
| Frequency | 19,000 | Hz |
| Output | 600 | W |
| Environment | Water | - |
| Temperature | From 10 to 20 | °C |
| Clearance | 0.5 | mm |
| Horn | ∅20 | mm |
| Testing Time | 3 | minute |

| | | |
|---|---|---|
| *Note 1: Letter "∅" means an outer diameter. *Note 2: Letter "t" means a thickness. | | |

The above heat treatment was conducted with utilization of a jig 1 as shown in Fig. 1. Jig 1 comprises a support 3 with a concave 2 having a hemicylindrical inner surface, and a shaft member 4 for pressurizing an inner surface of a specimen T (i.e. a resin-coating layer) contained in the support 3. Also used together with the jig 1 were a pressurizing device (not shown) for pressurizing the shaft member 4 against the specimen T, and a holder (not shown) for holding the support 3 so as not to move. As shown in Fig. 1, the respective specimen T of Invention Specimen Nos. 1 to 12 and Comparative Specimen Nos. 1 to 7 was positioned in the concave 2 of the housing 3 while controlling the pressurizing device so as to pressurize the shaft member 4 against the specimen T with a surface pressure of 40 MPa. Under the thus arranged state, the specimen T was subjected to the heat treatment at a temperature of 200°C for one hour.

The cavitation tests were conducted for two types of the specimen which were those not subjected to and subjected to the heat treatment.

In the first cavitation test, with regard to the respective specimen of Invention Specimen Nos. 1 to 12 and Comparative Specimen Nos. 1 to 7, which were not subjected to the heat treatment, a weight difference between those before and after the cavitation test was determined. The weight difference was divided by a specific gravity of the specimen to determine a volume decrease of the specimen. The volume decrease is shown at the column of "Without heat treatment" in Table 1.

In the second cavitation test, with regard to the respective specimen of Invention Specimen Nos. 1 to 12 and Comparative Specimen Nos. 1 to 7, which were subjected to the heat treatment, a weight difference between those before and after the cavitation test was determined. The weight difference was divided by a specific gravity of the specimen to determine a volume decrease of the specimen. The volume decrease is shown at the column of "With heat treatment" in Table 1.

Now the results of the first and second cavitation tests will be described. When the specimen is subjected to the cavitation test, the resin-coating layer is eroded by a cavitation phenomenon to exfoliate depending on the adhesion strength to the bearing alloy layer. Thus, it is possible to know an extent of the adhesion strength of the resin-coating layer to the bearing alloy layer on the basis of an extent of a volume decrease of the resin-coating layer before and after the cavitation test. In short, it is possible to know an extent of cavitation resistance property of the resin-coating layer.

At first, looking at the cavitation resistance property of the resin-coating layer and the Pb alloy plating layer, it will be apparent from a comparison among Comparative Specimen No. 7 provided with the Pb alloy coating layer and the other specimens provided with the resin-coating layer that the resin-coating layer is excellent in the cavitation resistance property than the Pb alloy coating layer since the volume decreases of the Pb alloy plating layer, which are the results of the first and second cavitation tests, are greater than those of the resin-coating layer.

In the case of the resin-coating layer, the cavitation resistance property thereof differs depending on the Sn content of the bearing alloy layer and the curing temperature of the resin-coating layer. It will be apparent from a comparison among Invention Specimen Nos. 1 to 12 and Comparative Specimen Nos. 1 to 6 that the greater the Sn content, the lower the cavitation resistance property. Referring to Comparative Specimen Nos. 1 to 6 in which each of the bearing alloy layers contains a much amount of Sn, the higher the curing temperature of the resin-coating layer, the lower the cavitation resistance property. For example, The curing alloy layers of Comparative Specimen Nos. 3 and 6 contain the same amount of Sn, but Comparative specimen No. 3 which has been cured at 250°C shows a greater volume decrease in the first cavitation test compared with Comparative specimen No. 6 which had been cured at 200°C. This is presumed to occur because Sn in the bearing alloy layer exudes on the surface of the bearing alloy layer during curing whereby adversely affecting the adhesion strength of the resin-coating layer. Thus, conventional plain bearings with a much amount of Sn cannot be cured at a very high temperature resulting in incomplete curing of the resin-coating layer.

On the other hand, while Invention Specimens Nos. 1 to 12 with a small amount of Sn are cured at a high temperature of 230°C or 250°C, a volume decrease of the resin-coating layer determined by each of the first and second cavitation tests is smaller than those of Comparative Specimen Nos. 1 to 6. Thus, it will be appreciated that according to the present invention the resin-coating layer can be cured at a higher temperature to improve its hardness whereby realizing the resin-coating layer excellent in the cavitation resistance property.

More specifically, it is possible to raise a plurality of specimen sets of Invention Specimen No. 1 and Comparative Specimen No. 1, Invention Specimen No. 1 and Comparative Specimen No. 3, Invention Specimen Nos. 2, 6 and Comparative Specimen Nos. 2, 5, and Invention Specimen No. 11 and Comparative Specimen 4, each of the specimen sets including an invention specimen(s) and a comparative specimen wherein the resin-coating layers have the same chemical composition but the bearing alloy layers contain different tin contents from each other between the sets Invention Specimen and the Comparative Specimen. In each of the specimen sets, comparing the Invention Specimen and the Comparative Specimen with regard to the volume decreases of the resin-coating layers in the first and second cavitation tests, the former volume decrease is smaller than the latter volume decrease.

In the second cavitation test conducted after heat treatment, a volume decrease of Invention specimens Nos. 1 to 12 is smaller than that of Comparative specimens Nos. 1 to 6. This means that even after the heat treatment to promote exudation of Sn from the bearing alloy layer, the exudation of Sn is restrained in Invention Specimens Nos. 1 to 12. Thus, according to the present invention, the adhesion strength of the resin-coating layer can be maintained under actual operation whereby exhibiting excellent cavitation resistance property.

Comparing Invention Specimen No. 1 having no Sn in the bearing alloy layer with Invention Specimen No. 8 containing Sn, the former is excellent in the cavitation resistance property. This means that the specimen without Sn in the bearing alloy layer has is preferable with regard to the cavitation resistance property.

With regard to the influence of the thickness of the resin-coating layer on the cavitation resistance property, Invention Specimen No. 4 in which the resin-coating layer has a thickness of 35 µm, which exceeds the upper limit (30 µm) of the preferable thickness, shows a greater volume decrease and thus the cavitation resistance property is inferior than the other Invention Specimens. However, Invention Specimen No. 4 exhibits better results than Comparative Specimens Nos. 1 to 6 in the volume decrease in the second cavitation test after heat treatment, which means that Invention Specimen No. 4 is also improved in the cavitation resistance property.

Comparing Invention Specimen Nos. 7 and 12 with each other with regard to the influence of the amount of the solid lubricant on the cavitation resistance property, the both specimens are the same in the components of the bearing alloy layer, the thickness of the resin-coating layer and the curing temperature, but different only in the amount of the solid lubricant of the resin-coating layer. From this comparison, it is appreciated that the smaller the solid lubricant amount, the better the cavitation resistance property.

## Claims

1. A plain bearing comprising a back metal layer and a bearing alloy layer of an Al alloy, in which the bearing alloy layer is formed on the back metal layer, and the Al alloy contains not more than 2 mass% Sn,
wherein there is provided a resin-coating layer on the bearing alloy layer, which resin-coating layer consists of a solid lubricant and a resin binder.

2. The plain bearing according to claim 1, wherein the resin binder consists of one or more selected from the group consisting of polyimide resin, polyamideimide resin, polybenzoimidazole resin, epoxy resin and phenol resin, and has a content of 30 to 80 volume % of the resin-coating layer.

3. The plain bearing according to claim 1 or 2, wherein the solid lubricant consists of one or more selected from the group consisting of MoS₂, graphite, polytetrafluoroethylene and BN, and has a content of 20 to 70 volume % of the resin-coating layer.

4. The plain bearing according to any one of claims 1 to 3, wherein the resin-coating layer has a thickness of 3 to 30 µm.

5. The plain bearing according to any one of claims 1 to 4, wherein the Al alloy consists essentially of not more than 2 mass% Sn, 0.1 to 20 mass% in a total content of one or more selected from the group consisting of Si, Cu, Ni, Cr, Zn, Mn, Ti, B, Zr, Mg, V, Pb and Bi, and the balance of Al and incidental impurities.

6. The plain bearing according to any one of claims 1 to 5, wherein the bearing alloy layer has a Vickers hardness of 60 to 130.
